# EUROPEAN PATENT SPECIFICATION

(11) **EP 1 606 320 B1**
(45) Date of publication and mention of the grant of the patent: **13.06.2007**
(21) Application number: 04722296.3
(22) Date of filing: 22.03.2004
(51) Int. Cl.: C08B 37/00, C08B 15/00, C08F 8/00

(54) **CROSSLINKED THREE-DIMENSIONAL POLYMER NETWORK, METHOD FOR PREPARING SAME, SUPPORT MATERIAL COMPRISING SAME AND USES THEREOF**
DREIDIMENSIONALES VERNETZTES POLYMERNETZWERK, VERFAHREN ZU DESSEN HERSTELLUNG, DIESES ENTHALTENDER TRÄGERMATERIAL UND IHRE VERWENDUNG
RESEAU POLYMERE TRIDIMENSIONNEL RETICULE, PROCEDE PERMETTANT DE PREPARER CE RESEAU, MATERIAU DE SUPPORT CONTENANT CE RESEAU ET UTILISATIONS DE CELUI-CI

(30) Priority: 27.03.2003 FR 0303770
(43) Date of publication of application: 21.12.2005
(73) Proprietor: CHIROSEP, 76170 La Frenaye (FR)
(72) Inventor: Duval, Raphael, F-14800 Deauville (FR)
(74) Representative: Touati, Catherine
(86) International application number: PCT/EP2004/004015
(87) International publication number: WO 2004/085485

(56) References cited:
- EP-A- 0 864 586
- EP-A- 0 899 272
- EP-A- 0 985 681
- EP-A- 0 985 682
- WO-A-91/14710
- WO-A-93/05084
- DE-A- 4 324 636
- FR-A- 2 677 366

## Description

The present invention relates to crosslinked three-dimensional polymer networks, to the method for preparing them, and also to optically active support materials containing said three-dimensional polymer networks.

The invention also relates to the use of these crosslinked three-dimensional polymer networks and also to the optically active supports for optically enriching chiral molecules, and more particularly for separating enantiomers by liquid, supercritical, gas or gas-liquid chromatography.

When they are used in a chromatographic process, the supports of the invention constitute homochiral stationary phases, or "CSPs", and the technique used is then called chiral or enantioselective chromatography.

Chiral or enantioselective chromatography has experienced a considerable expansion over the last twenty years, both for applications in terms of analysis, but also for the industrial preparation of homochiral pharmaceutical molecules.

In fact, since the thalidomide tragedy in the 1960s, the health authorities of industrialized countries have gradually imposed regulatory restraints on industrial companies in the field of pharmacy, which must now support their dossier for a marketing authorization for new medicinal products with compared pharmacological and toxicological data for each homochiral or enantiomer molecule present in the future medicinal product.

Among the various homochiral stationary phases, or CPSs, which have been the subject of industrial developments, in order to produce homochiral molecules by preparative chromatographic resolution, polymeric selectors based on cellulose homopolymer derivatives (EP 0 147 804) or based on polymers having an asymmetric carbon atom in the principal chain (EP 0 155 637 B2) have until now constituted the most widely used technology.

Other selectors have also been the subject of considerable developments on an industrial scale, such as optically active polymers crosslinked in a network and chemically attached to a support (PCT/SE 93/01050) or also crosslinked but not necessarily chemically attached to a support (FR 98/11376, FR 98/11377, USP 6,042,723, EP 0 899 272 A1, EP 0 864 586 A2, WO 96/27615, WO 97/04011).

Other selectors have also been described, in particular in US patent 6,277,782 and patent applications EP 985 682 and EP 656 331. These selectors consist of a single type of homochiral units which are monomers or polymers crosslinked by means of a nonchiral crosslinking agent or of a chiral, but not optically active, crosslinking agent as described in US patent 6,011,149.

A hydrogel of chitosan and 2,3-dialdehydo-β-cyclodextrin has also been described in Chemical Reviews, 1998, Vol. 98, No. 5, page 1780.

However, there exists a real need for new optically active supports capable of allowing the separation of molecules exhibiting diverse chemical structures and exhibiting abilities for enrichment and for separation of enantiomers which are greater than those known and described until now, this ability being measured by the chromatography selectivity factor α.

After long and thorough research studies, the applicant company has found that these aims are achieved by using a crosslinked optically active three-dimensional polymer network according to the invention. The Applicant described chiral selectors which are formed by a specific cross-linked three-dimensional polymer network, in the patent application FR0112208.

The Applicant has further completed his searches and found numerous chiral selectors formed by a cross-linked three-dimensional polymer network.

The invention therefore relates, according to a first advantageous embodiment, to a crosslinked optically active three-dimensional polymer network consisting of one homochiral unit of at least one first selector and of at least one homochiral unit of at least one second selector of a structure different from the first selector,
the homochiral unitof the first selector containing one polymerizable functional group and the homochiral unit(s) of the second selector containing at least two polymerizable or crosslinkable functional groups,
the homochiral units being chemically linked to one another,
with the exclusion of the crosslinked three-dimensional polymer networks obtained by polymerization of (S)-glycidylmethacrylate and simultaneous cross-linking with (S,S)-2,3-butanediol dimethacrylate, or by polymerization of 3-([2-(S)-hydroxy]-N-benzylamino)propyl methacrylate and simultaneous cross-linking with (S,S)-2,3-butanediol dimethacrylate.

A "homochiral unit" represents a monomeric, oligomeric or polymeric compound which is homochiral.

The polymerizable or crosslinkable functional groups are in particular primary, secondary or tertiary hydroxyl groups, primary or secondary amine groups, sulfhydryl groups, ethylenic double bonds or aldehyde groups.

In the present application, the expression "homochiral units being linked to one another" is intended to mean the fact that the various homochiral units are linked to one another via bonds resulting from polymerization (homopolymerization or copolymerization) or from crosslinking. The polymerization is carried out by virtue of functional groups present on the homochiral units. The crosslinking, which allows the formation of a three-dimensional network, is carried out by virtue of said functional groups or, optionally, using a nonchiral crosslinking agent containing at least two polymerizable or crosslinkable functional groups. With polymerization, a linear chain is obtained, whereas with crosslinking, a three-dimensional assembly is obtained.

The oligomers or polymers are of natural origin (polysaccharides, proteins, DNA, etc.) or are obtained by homopolymerization of the same homochiral monomer. They may also be obtained by copolymerization of two homochiral monomers of different chemical structure. Optically active heteropolymers are then obtained.

The optically active heteropolymers or homopolymers consist of at least 11 homochiral units (Nomenclature et Terminologie en Chimie Organique [Nomenclature and Terminology in Organic Chemistry], September 1996, Techniques de l'Ingénieur [Techniques for the Engineer], 249, rue de Crimèe, 75019 Paris) and their related oligomers consist of 1 to 10 homochiral units which are identical for the homopolymers and homooligomers and different for the heteropolymers and heterooligomers.

By way of example, a β-cyclodextrin or cyclomaltoheptaose is a cyclic oligosaccharide (Chemical Reviews, 1998, Vol. 98, No. 5, p 1745) and therefore a homooligomer.

It is a chiral selector which is greatly used in the synthesis of chiral stationary phases for chromatography. It may be mono- and polyfunctional given that the cyclodextrin molecule contains 21 primary and secondary alcohol functions. As such, β-cyclodextrin has a perfectly defined optical rotation and is optically active.

In accordance with the invention, the homochiral units containing one polymerizable functional group are chosen from the group comprising in particular mono-6-O-(4-allyloxyphenylcarbamate)-hexakis-6-O-(3,5-dimethylphenylcarbamate)-di-heptakis-2,3-O-(3,5-dimethylphenylcarbamate)-β-cyclodextrin, 2-propynyl-tetra-O-acetyl-β-glucopyranoside, allyl-α-D-galactopyranoside, 1-O-allyl-2-deoxy-4,6-O-isopropylidene-2-(trifluoroacetamido)- α-D-galacto pyranoside, 7-allyl-7,8-dihydro-8-oxoguanosine, (R)-(+)-α-acryloxy-β,β-dimethylbutyrolactone, acrylamido-(L)-alanine ethyl ester, (2S,5R)-(+)-5-vinyl-2-quinuclidinemethanol, (2R,5R)-()-5-vinyl-2-quinuclidinemethanol, quinine and quinidine.

In accordance with the invention, the homochiral units containing two polymerizable or cross-linkable functional groups are chosen from the group comprising in particular (R,R)-dithiothreitol (DTT), tartaric acid or derivatives thereof, such as N,N'-diallyltartramide (DAT), di-tert-butylbenzoyldiallyltartramide (DBBDAT), diacetyldiallyltartramide (DADAT), bi-derivatives of cyclodextrin, in particular β-cyclodextrin, such as bis-6A, 6D-O-(4-allyloxyphenylcarbamate)pentakis-6-O-(3,5-dimethylphenylcarbamate)di-heptakis-2,3-(3,5-dimethylphenylcarbamate)-β-cyclodextrin.

In accordance with the invention, the homochiral units containing more than two polymerizable or cross-linkable functional groups are chosen from the group comprising in particular three- and poly-dericvatives of cyclodextrin, in particular β-cyclodextrin, such as tetrakis-60-(4-allyloxyphenylcarbamate)tris-6-O-(3,5-dimethylphenylcarbamate)-heptakis-2,3-O-di-(3,5-dimethylphenylcarbamate)-β-cyclodextrin (T(AOPC-DMPC)), cellulose or derivatives thereof such as cellulose [6-(4-allyloxyphenyl)urethane, tris-2,3,6-[3,5-dimethylphenyl)-urethane (L(AOPC-DMPC)), chitosan or derivatives thereof.

The structural formulae of some of these homochiral units containing at least two or at least three polymerizable or crosslinkable functional groups are given below:

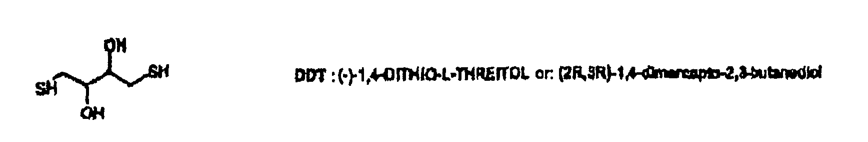

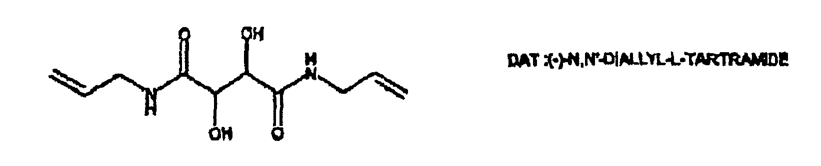

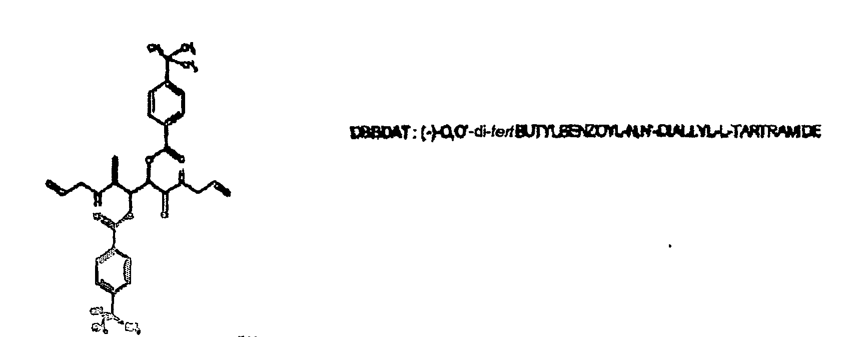

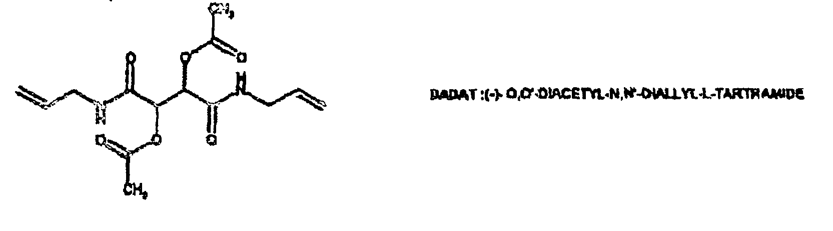

According to a second advantageous embodiment of the invention, the crosslinked optically active three-dimensional polymer network consists of at least one homochiral unit of at least one first selector and of at least one homochiral unit of at least one second selector of structure different from the first selector and of at least one homochiral unit of at least one third selector of structure different from the first and from the second selector, the homochiral unit(s) of the first selector containing one polymerizable functional group and the homochiral unit(s) of the third selector containing at least one polymerizable functionl groups, the homochiral units of the second selector containing at least two polymerizable functional groups, the homochiral units being chemically linked to one another.

Of course, the number of homochiral selectors of different structures is not limited to three, it may be much higher.

The homochiral unit(s) of the first selector contain(s) one and only one polymerizable functional group whereas the homochiral unit(s) of the third selector contain(s) either one or either two or even more polymerizable functional groups.

According to another advantageous embodiment of the polymer network in accordance with the invention, attached to at least some of the homochiral units of a selector chosen from the group comprising the first selector, the second selector and, optionally, the third selector, is a nonchiral crosslinking agent containing at least two polymerizable or crosslinkable functional groups.

The crosslinking agent containing at least two polymerizable or crosslinkable functional groups is chosen from the group comprising in particular ethanedithiol, trithiocyanuric acid, 1,6-hexanedithiol, 1,2,6-hexanetrioltrithioglycolate and 2,5-dimercapto-1,3,4-thiadiazole.

According to another advantageous embodiment, in the polymer network in accordance with the invention, the homochiral units of at least one of the selectors are β-cyclodextrin derivatives.

Thus, according to this particular embodiment, the polymer network may contain either units of a monofunctional derivative of β-cyclodextrin, i.e. derivative of β-cyclodextrin in which 1 -OH goup has been replaced with a polymerizable functional group, and/or units of a bifunctional derivative of P-cyclodextrin, i.e. a derivative of β-cyclodextrin in which at least 2 -OH groups have each been replaced with a polymerizable or crosslinkable functional group, and optionally units of a derivative of β-cyclodextrin in which more than 2 -OH groups have each been replaced with a polymerizable or crosslinkable functional group.

The invention also relates to a method for preparing the crosslinked optically active polymer network.

Accordingly, the crosslinked optically active polymer network according to the first embodiment of the invention, are prepared using a method wherein:
a) at least one first selector consisting of one homochiral unit containing one polymerizable functional group, at least one second selector consisting of at least one homochiral unit containing at least two polymerizable or crosslinkable functional groups are selected;
b) optionally, at least one nonchiral crosslinking agent containing at least two polymerizable or crosslinkable functional groups is selected;
c) optionally, at least the homochiral unit of the first selector and/or at least some of the second selector are reacted with the nonchiral crosslinking agent;
d) either the homochiral unit of the first selector is copolymerized with the homochiral units of the second selector and,;
e) or else at least some of the homochiral units containing at least two polymerizable or crosslinkable functional groups of the second selector are homopolymerized, and the homopolymerizates obtained are copolymerized with the homochiral unit of the first selector and optionally crosslinked with the remaining homochiral units containing at least two polymerizable or crosslinkable functional groups of the second selector.

Accordingly, the crosslinked optically active polymer network according to the second embodiment of the invention, are prepared using a method wherein:
a) at least one first selector consisting of at least one homochiral unit containing one polymerizable functional group, at least one second selector consisting of at least one homochiral unit containing at least two polymerizable or crosslinkable functional groups and at least one third selector consisting of at least one homochiral unit containing at least one polymerizable or crosslinkable functional group are selected;
b) optionally, at least one nonchiral crosslinking agent containing at least two polymerizable or crosslinkable functional groups is selected;
c) optionally, at least some of the homochiral units of the first selector and/or of the second selector and/or, of the third selector are reacted with the nonchiral crosslinking agent;
d) either the homochiral units of the first selector are copolymerized with the homochiral units of the second selector and with the homochiral units of the third selector;
e) or else at least some of the homochiral units containing one polymerizable or crosslinkable functional group of the first selector are homopolymerized, and the homopolymerizates obtained are crosslinked with the homochiral units containing at least two polymerizable or crosslinkable functional groups of the second selector and of the third selector, optionally in the presence of the remaining homochiral units of the first selector.

According to the particular embodiments including steps b) and c), in steps d) and e), use is made of at least some homochiral units of the first selector and/or of the second selector and/or, optionally, of the third selector to which the crosslinking agent is attached.

When it is desired to use a synthetic optically active polymer as one of the homochiral selectors, before carrying out the crosslinking operation with one or more other homochiral selectors, it is possible to use all the techniques described in the work by Eric Selegny entitled "Optically active polymers", integrated into the series of works "Charged and reactive polymers", volume 5, published in 1979 by D. Reidel Publishing Company, Dorrecht, Post Office Box 17, The Netherlands.

The invention also relates to an optically active support material, the optical activity properties of which are due to the fact that it consists in part of the polymer network described above.

The optically active support material in accordance with the invention consists of at least 0.1 to 100% of said optically active three-dimensional polymer network. The remainder up to 100% is generally in the form of silica gels, or of solid particles of mineral origin, such as silicon oxide, titanium oxide, aluminum oxide, clays, or of organic origin, such as polystyrenes, polyvinyl alcohols, etc.

The silica gels are the preferred supports when it is desired to use the final support material as CSP for enantioselective chromatography.

In accordance with the invention, the polymer network is either chemically linked to the mineral or organic support, or is physically deposited into the pores of the support, as described in the patents mentioned in the prior art. In the first case, the support undergoes prior chemical conversion making it possible to introduce functions capable of reacting and creating covalent bonds with the selectors of the polymer network.

The invention also relates to the use of an optically active support material containing the crosslinked three-dimensional polymer network described above, for removing from a mixture of at least two constituents, chosen from the group comprising organic, mineral or organomineral molecules, at least most of one of these constituents. It is in fact an operation of purification by simply bringing the various constituents into contact with the support materials containing the crosslinked three-dimensional polymer network, which trap impurities, for example, or which, on the contrary, preferentially retain the desired constituent. The support materials may also be used as a stationary phase for separating said constituents by a chromatographic method.

The chromatographic methods use a simple column or a multicolumn system according to the "simulated mobile bed" technique.

The invention also relates to the use of an optically active support material containing the crosslinked three-dimensional polymer network described above, for removing from a mixture of at least two enantiomers, chosen from the group comprising chiral organic molecules or chiral organomineral molecules, at least part of one of these constituents, so as to enrich the mixture in one of the optically active homochiral molecules and to thus obtain one of the enantiomers enriched. The method used may be simply bringing said optically active support material into contact with the mixture of enantiomers, one of the enantiomers being preferentially adsorbed. The optical enrichment operation is carried out by filtration of the complex (optically active support material/adsorbed enantiomer). The complex is then destroyed by bringing it into contact with a liquid which is a solvent for said enantiomer and which has the property of eliminating the specific interaction of said enantiomer with the optically active support material. The desorbed enantiomer is either not used since it is of no value and, in this case, it is the first filtrate which is optically enriched in the desired enantiomer, or it is used as optically enriched enantiomer.

The invention also relates to the use of an optically active support material as an enantioselective stationary phase for separating optically active molecules by a chromatographic method. This technique is also advantageous as a method for producing optically or enantiomerically pure or enriched homochiral molecules.

The invention also relates to the use of the polymer network according to the invention, optionally in the presence of a transition metal, as catalyst for enantioselective synthesis. As examples of enantioselective synthesis, stereoselective reduction of carbonyl functions or reactions involving the formation of carbon-carbon bonds, as previously described inf FR2816948, can be cited.

### EXAMPLES:

### Example 1: (S)-glycidyl methacrylate -(2R,3R)-butanediol dimethacrylate copolymer further modified by N-benzylamine.

5g of (2R,3R)-butanediol (marketed product) are dissolved in 50 ml of anhydrous triethylamine and 10 ml of methacryloyl chloride are added in 3 hours between 0 and + 5°C. The reaction medium is stirred during 5 hours at room temperature and then cooled again to 0, +5°C. 20 ml of water are added in 3 hours while maintaining the temperature lower than 20°C. (2R,3R)-butanediol dimethacrylate is extracted 3 times with 30 ml of methylene chloride. The chloromethylene solution is dried. The weight of the residue is 12,1g, i.e. a yield of 96% (theoretical weight : 12,55g).

The copolymerization of (S)-glycidyl methacrylate and (2R,3R)-butanediol dimethacrylate is carried out in teh presesnce of a free radical initiator according to the suspension polymerizaion meethod and the conditions of the synthesis are the one escribed in the French patent 2 816 948 (examples 1 à 4). The obtained polymer 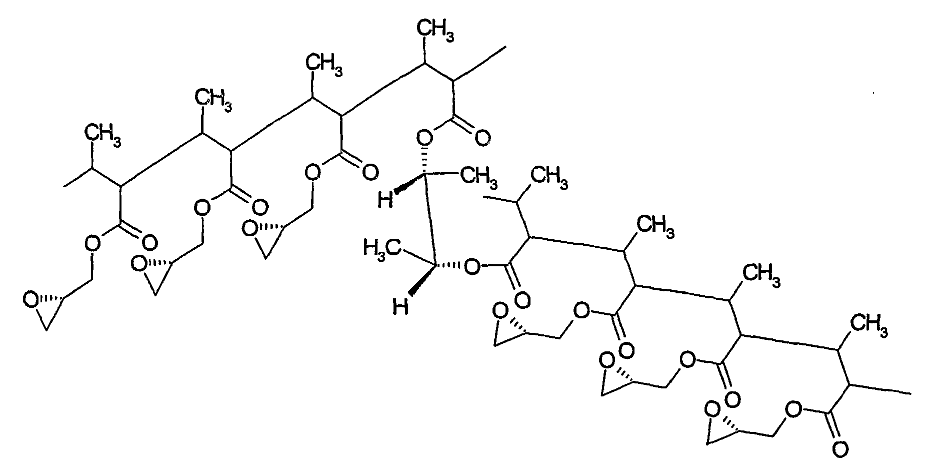 has the following chemical structure :
Elemental analysis: C: 59,7 % ; H : 7,4% ; O : 32,8%.
The functionality in epoxide functions is 2,1 meq/g.

The pur polymer pellets are separated depending on their size according to example 3 of the patent in question (use of sieves of 500, 300 et 106 µm).

The polymer is then modified by the action of benzylamine according to the procedure of example 4, using pellets with a mean diameter of 106 to 300 µm.

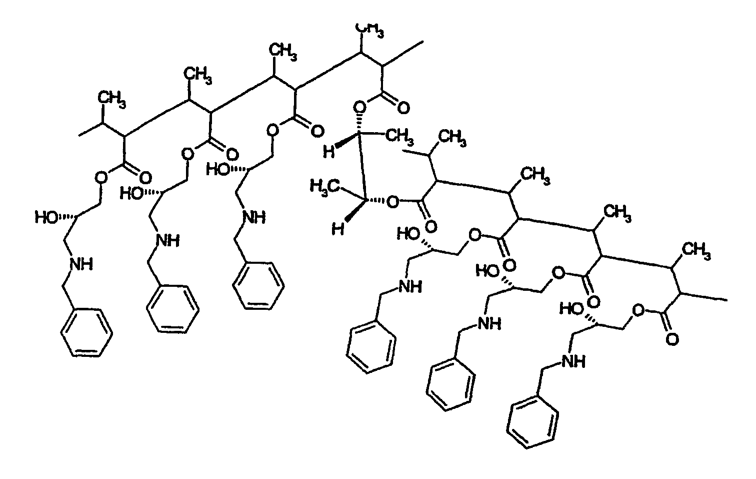

The polymer, the structure of which is represented above presents a functionalization rate of 1.12 mmol/g of polymer.
Elemental microanalyse: C : 59,7% ; H : 7,2% ; N : 1,50%.

A catalyst complex based on di-(para-cymene)Ruthenium dichloride and above polymer is prepared in the conditions of example 5 of FR 281948.

Its use in the asymmetric reduction of acetophenone is performed according o example 6 of said patent.

The reduction reaction is as follows:

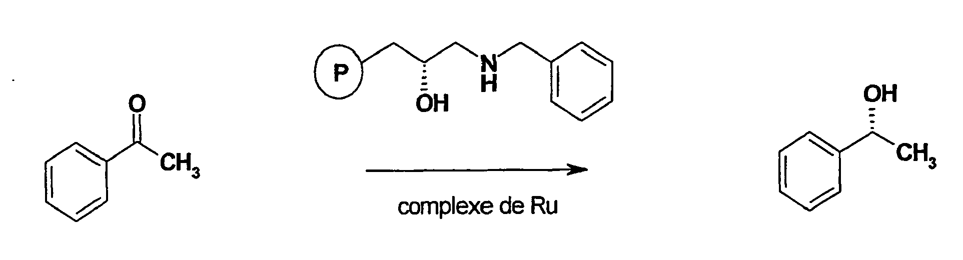

Acétophenone and the polymer comprising the Ruthenium complex are added in order to obtain a ratio acetophenone/mtal 20/1. 0,03mol/L of potassium tertio-butylate in isopropanol are added with a ratio Ruthenium/tertio-butylate = 1/5. The reaction mixture is stirred during 3 hours.

The enantiomeric excess of 1-phenylethanol obtained is measured by gas chromatographie on a chiral column SUPELCO beta-Dex-225 (30m x 25mm). It is obtained with an enantiomeric excess of 75% and a conversion of 95%.

### EXaMPLE 2 : Synthesis of a mono-6-O-(4-allyloxyphenylcarbamate)-hexakis-6-O-(3,5-dimethylphenylcarbamate)-diheptakis-2,3-O-(3,5-dimethylphénylcarbamate) and ditertiobutylbenzoyl diallyl tartramide copolymer.

Mono-6-O-(4-allyloxyphenylcarbamate)-hexakis-6-0-(3,5-dimethylphenylcarbamate)-diheptakis-2,3-0-(3,5-dimethylphenylcarbamate) is copolymerized with ditertiobutylbenzoyl diallyl tartramide (configuration 2S, 3S), in the prsence of silica gel, after precipitation of the reactants into the silica gel pores, according to the following procedure: 0,25 g of mono-6-O-(4-allyloxyphenylcarbamate)-hexakis-6-O-(3,5-dimethylphenylcarbamate)-diheptakis-2,3-O-(3,5-dimethylphenylcarbamate) are dissolved in 10 ml of THF. 3 g of Kromasil silica, 5µm (pore diameter 20 nm) are added and the obtained suspension is homogeneised. 0,15 g of ditertiobutylbenzoyl diallyl tartramide (configuration 2S, 3S) in solution in 5 ml of THF are added to the former suspension. 200 ml of heptane are dropped in 6 hours. The suspension is filtered and the insoluble is taken out in a wet state in 100 ml of heptane. 0,05 g of AIBN (azo-bis-isobutyronitrile, free radicals initiator) are added and the suspension is refluxing during 6 hours. 0,05 g of AIBN are again added and the suspension is refluxing during 6 hours. The mass is cooled and the suspension is filtered on sintered filter n°5. The insoluble is washed 3 times with 50 ml of boiling THF and 3 times with 50 ml of boiling methylene chloride. The insoluble is dried a 80°C. Dry weight= 3.35g.
Elemental Microanalysis: C% 15.19 ; H% 1.65 ; N% 1.16. 3 g are used to fill a HPLC column of 250mm (length) x 4,6 mm (internal diamter). The column is conditioned in pure chloroforme. 1 µg f Indapamide is injected in the column (20 µl of a chloroform solution) an dis eluted in pure chloroforme pur with a flow rate of 1 ml/mn. The detection wavelength is 254 nm and the scale of the optical density is 0.2. The dead time measured with sodium azide de sodium is of 3'. Retention factors are k'1 = 11,' and k'2 = 14.7. Enantiosélectivity rate α = k'2/k'1 is of 1.29.

## Claims

1. A crosslinked optically active three-dimensional polymer network consisting of one homochiral unit of at least one first selector and of at least one homochiral unit of at least one second selector of a structure different from the first selector,
the homochiral unit of the first selector containing one polymerizable functional group and the homochiral unit(s) of the second selector containing at least two polymerizable or crosslinkable functional groups,
the homochiral units being chemically linked to one another,
with the exclusion of the crosslinked three-dimensional polymer networks obtained by polymerization of (S)-glycidylmethacrylate and simultaneous cross-linking with (S,S)-2,3-butanediol dimethacylate or by polymerization of 3-([2-(S)-hyroxy]-N-benzylamino)propylmethacrylate and simultaneous cross-linking with (S,S)-2,3-butanediol methacrylate.

2. A crosslinked optically active three-dimensional polymer network consisting of at least one homochiral unit of at least one first selector and of at least one homochiral unit of at least one second selector of structure different from the first selector and of at least one homochiral unit of at least one third selector of structure different from the first and from the second selector, the homochiral unit(s) of the first selector containing one polymerizable functional group, the homochiral unit(s) of the third selector containing at least one polymerizable functional group and the homochiral unit(s) of the second selector containing at least two polymerizable or crosslinkable functional groups, the homochiral units being chemically linked to one another.

3. The polymer network as claimed in claim 1 or in claim 2, **characterized in that** the homochiral units of the first selector and, optionally, of the third selector are chosen from the group comprising in particular mono-6-O-(4-allyloxyphenylcarbamate)-hexakis-6-O-(3,5-dimethylphenylcarbamate)-di-heptakis-2,3-O-(3,5-dimethylphenylcarbamate)-β-cyclodextrin, 2-propynyl-tetra-O-acetyl-β-glucopyranoside, allyl-α-D-galactopyranoside, 1-O-allyl-2-deoxy-4,6-O-isopropylidene-2-(trifluoroacetamido)- α-D-galacto pyranoside, 7-allyl-7,8-dihydro-8-oxoguanosine, (R)-(+)-α-acryloxy-β,β-dimethylbutyrolactone, acrylamido-(L)-alanine ethyl ester, (2S,5R)-(+)-5-vinyl-2-quinuclidinemethanol, (2R,5R)-()-5-vinyl-2-quinuclidinemethanol, quinine and quinidine.

4. The polymer network as claimed in one of claims 1 to 3, **characterized in that** the homochiral units of the second selector and, optionally, of the third selector are chosen from the group comprising in particular (R,R)-dithiothreitol (DTT), tartaric acid or derivatives thereof, such as N,N'-diallyltartramide (DAT), di-tert-butylbenzoyldiallyltartramide (DBBDAT), diacetyldiallyltartramide (DADAT), bi-derivatives of cyclodextrin, in particular β-cyclodextrin, such as bis-6A,6D-O-(4-allyloxyphenylcarbamate)pentakis-6-O-(3,5-dimethylphenylcarbamate)-di-heptakis-2,3-(3,5-dimethylphenylcarbamate)-β-cyclodextrin.

5. The polymer network as claimed in any one of claims 1 to 4, in which the homochiral units of at least one of the selectors are β-cyclodextrin derivatives.

6. The polymer network as claimed in any one of claims 1, 3 to 5, **characterized in that** attached to at least some of the homochiral units of a selector chosen from the group comprising the first selector and the second selector is a nonchiral crosslinking agent containing at least two polymerizable or crosslinkable functional groups.

7. The polymer network as claimed in any one of claims 2 to 5, **characterized in that** attached to at least some of the homochiral units of a selector chosen from the group comprising the first selector, the second selector and the third selector, is a nonchiral crosslinking agent containing at least two polymerizable or crosslinkable functional groups.

8. The polymer network as claimed in claim 6 or 7, **characterized in that** the nonchiral crosslinking agent containing at least two polymerizable or crosslinkable functional groups is chosen from the group comprising in particular ethanedithiol, trithiocyanuric acid, 1,6-hexanedithiol, 1,2,6-hexanetrioltrithioglycolate and 2,5-dimercapto-1,3,4-thiadiazole.

9. A method for preparing a polymer network as claimed in any one of claims 1, 6 or 8, **characterized in that**:
a) at least one first selector consisting of one homochiral unit containing one polymerizable functional group, at least one second selector consisting of at least one homochiral unit containing at least two polymerizable or crosslinkable functional groups and are selected;
b) optionally, at least one nonchiral crosslinking agent containing at least two polymerizable or crosslinkable functional groups is selected;
c) optionally, at least the homochiral unit of the first selector and/or at least some of the second selector are reacted with the nonchiral crosslinking agent;
d) either the homochiral unit of the first selector is copolymerized with the homochiral units of the second selector;
e) or else at least some of the homochiral units containing at least two polymerizable or crosslinkable functional groups of the second selector are homopolymerized, and the homopolymerizates obtained are copolymerized with the homochiral unit of the first selector and crosslinked with the remaining homochiral units containing at least two polymerizable or crosslinkable functional groups of the second selector.

10. A method for preparing a polymer network as claimed in any one of claims 2, 7 or 8, **characterized in that**:
a) at least one first selector consisting of at least one homochiral unit containing one polymerizable functional group, at least one second selector consisting of at least one homochiral unit containing at least two polymerizable or crosslinkable functional groups and, at least one third selector consisting of at least one homochiral unit containing at least one polymerizable or crosslinkable functional group are selected;
b) optionally, at least one nonchiral crosslinking agent containing at least two polymerizable or crosslinkable functional groups is selected;
c) optionally, at least some of the homochiral units of the first selector and/or of the second selector and/or, of the third selector are reacted with the nonchiral crosslinking agent;
d) either the homochiral units of the first selector are copolymerized with the homochiral units of the second selector and with the homochiral units of the third selector;
e) or else at least some of the homochiral units containing one polymerizable or crosslinkable functional group of the first selector are homopolymerized, and the homopolymerizates obtained are crosslinked with the homochiral units containing at least two polymerizable or crosslinkable functional groups of the second selector and of the third selector, optionally in the presence of the remaining homochiral units of the first selector.

11. An optically active support material containing a polymer network as claimed in any one of claims 1 to 8, or prepared according to the method of claim 9 or 10, and an inert, mineral or organic support, said support preferably being in the form of solid particles.

12. The support material as claimed in claim 11, **characterized in that** it consists of at least 0.1% by weight of the polymer network.

13. The support material as claimed in claim 11 or claim 12, **characterized in that** the polymer network is chemically linked to the support or is deposited onto the support.

14. The use of a polymer network as claimed in any one of claims 1 to 8 or prepared as claimed in claim 9 or 10, or of an optically active support material as claimed in any one of claims 11 to 13 for removing from a mixture of at least two constituents, chosen from the group comprising organic, mineral or organomineral molecules, at least part of one of these constituents, or for separating said constituents by chromatographic method.

15. The use of a polymer network as claimed in any one of claims 1 to 8 or prepared as claimed in claim 9 or 10 or of an optically active support material as claimed in any one of claims 11 to 13, for removing from a mixture of at least two enantiomers, chosen from the group comprising chiral organic molecules or chiral organomineral molecules, at least part of one of these constituents, so as to enrich the mixture in one of the optically active homochiral molecules and to thus obtain one of the enantiomers enriched.

16. The use of a polymer network as claimed in any one of claims 1 to 8 or prepared as claimed in claim 9 or 10, or of an optically active support material as claimed in any one of claims 11 to 13, for separating optically active molecules by chromatographic method.

17. The use of a polymer network as claimed in any one of claims 1 to 8 or prepared as claimed in claim 9 or 10, optionally in the presenceo of a transition metal, as catalyst for asymmetric synthesis.

## Patentansprüche

1. Vernetztes, optisch aktives, dreidimensionales Polymernetzwerk, das aus einer homochiralen Einheit zumindest eines ersten Selektors und zumindest einer homochiralen Einheit zumindest eines zweiten Selektors mit einer Struktur, die sich von dem ersten Selektor unterscheidet, besteht,
worin die homochirale Einheit des ersten Selektors eine polymerisierbare funktionelle Gruppe enthält und die homochirale(n) Einheit(en) des zweiten Selektors zumindest zwei polymerisierbare oder vernetzbare funktionelle Gruppen enthält/enthalten,
worin die homochiralen Einheiten chemisch miteinander verknüpft sind,
wobei die vernetzten dreidimensionalen Polymernetzwerke ausgenommen sind, die durch Polymerisation von (S)-Glycidylmethacrylat und simultanem Vernetzen mit (S,S)-2,3-Butandioldimethacrylat oder durch Polymerisation von 3-([2-(S)-Hydroxy]-N-benzylamino)propylmethacrylat und simultanem Vernetzen mit (S,S)-2,3-Butandiolmethacrylat erhalten werden.

2. Vernetztes, optisch aktives, dreidimensionales Polymernetzwerk, das aus zumindest einer homochiralen Einheit zumindest eines ersten Selektors und zumindest einer homochiralen Einheit zumindest eines zweiten Selektors mit einer Struktur, die sich von dem ersten Selektor unterscheidet, und zumindest einer homochiralen Einheit zumindest eines dritten Selektors mit einer Struktur, die sich von dem ersten und dem zweiten Selektor unterscheidet, besteht, worin die homochirale(n) Einheit(en) des ersten Selektors eine polymerisierbare funktionelle Gruppe enthält/enthalten, die homochirale(n) Einheit(en) des dritten Selektors zumindest eine polymerisierbare funktionelle Gruppe enthält/enthalten und die homochirale(n) Einheit(en) des zweiten Selektors zumindest zwei polymerisierbare oder vernetzbare funktionelle Gruppen enthält/enthalten,
worin die homochiralen Einheiten chemisch miteinander verknüpft sind.

3. Polymernetzwerk gemäß Anspruch 1 oder Anspruch 2, **dadurch gekennzeichnet, daß** die homochiralen Einheiten des ersten Selektors und gegebenenfalls des dritten Selektors aus der Gruppe ausgewählt sind, die insbesondere Mono-6-O-(4-allyloxyphenylcarbamat)-hexakis-6-O-(3,5-dimethylphenylcarbamat)-di-heptakis-2,3-O-(3,5-dimethylphenylcarbamat)-β-cyclodextrin, 2-Propinyl-tetra-O-acetyl-β-glucopyranosid, Allyl-α-D-galactopyranosid, 1-O-Allyl-2-deoxy-4,6-O-isopropyliden-2-(trifluoracetamido)-α-D-galactopyranosid, 7-Allyl-7,8-dihydro-8-oxoguanosin, (R)-(+)-α-Acryloxy-β,β-dimethylbutyrolacton, Acrylamido-(L)-alaninethylester, (2S,5R)-(+)-5-Vinyl-2-chinuclidinmethanol, (2R,5R)-()-5-Vinyl-2-chinuclidinmethanol, Chinin und Chinidin umfaßt.

4. Polymernetzwerk gemäß einem der Ansprüche 1 bis 3, **dadurch gekennzeichnet, daß** die homochiralen Einheiten des zweiten Selektors und gegebenenfalls des dritten Selektors aus der Gruppe ausgewählt sind, die insbesondere (R,R)-Dithiothreitol (DTT), Weinsäure oder Derivate davon wie N,N'-Diallyltartramid (DAT), Di-tert-butylbenzoyldiallyltartramid (DBBDAT), Diacetyldiallyltartramid (DADAT), Biderivaten von Cyclodextrin, insbesondere β-Cyclodextrin, wie Bis-6A,6D-O-(4-allyloxyphenylcarbamat)-pentakis-6-O-(3,5-dimethylphenylcarbamat)-di-heptakis-2,3-(3,5-dimethylphenylcarbamat)-β-cyclodextrin umfaßt.

5. Polymernetzwerk gemäß irgendeinem der Ansprüche 1 bis 4, worin die homochiralen Einheiten von zumindest einem der Selektoren β-Cyclodextrinderivate sind.

6. Polymernetzwerk gemäß irgendeinem der Ansprüche 1 und 3 bis 5, **dadurch gekennzeichnet, daß** ein nicht-chirales Vernetzungsmittel, das zumindest zwei polymerisierbare oder vernetzbare funktionelle Gruppen enthält, mit zumindest einigen der homochiralen Einheiten eines Selektors verbunden ist, der aus der Gruppe ausgewählt ist, die den ersten Selektor und den zweiten Selektor umfaßt.

7. Polymernetzwerk gemäß irgendeinem der Ansprüche 2 bis 5, **dadurch gekennzeichnet, daß** ein nicht-chirales Vernetzungsmittel, das zumindest zwei polymerisierbare oder vernetzbare funktionelle Gruppen enthält, mit zumindest einigen der homochiralen Einheiten eines Selektors verbunden ist, der aus der Gruppe ausgewählt ist, die den ersten Selektor, den zweiten Selektor und den dritten Selektor umfaßt.

8. Polymernetzwerk gemäß Anspruch 6 oder 7, **dadurch gekennzeichnet, daß** das nicht-chirale Vernetzungsmittel, das zumindest zwei polymerisierbare oder funktionelle Gruppen enthält, aus der Gruppe ausgewählt ist, die insbesondere Ethandithiol, Trithiocyanursäure, 1,6-Hexandithiol, 1,2,6-Hexantrioltrithioglycolat und 2,5-Dimercapto-1,3,4-thiadiazol umfaßt.

9. Verfahren zur Herstellung eines Polymernetzwerks, wie es in irgendeinem der Ansprüche 1, 6 oder 8 beansprucht wird, **dadurch gekennzeichnet, daß**
a) zumindest ein erster Selektor, der aus einer homochiralen Einheit besteht, die eine polymerisierbare funktionelle Gruppe enthält, und zumindest ein zweiter Selektor, der aus zumindest einer homochiralen Einheit besteht, die zumindest zwei polymerisierbare oder vernetzbare funktionelle Gruppen enthält, ausgewählt werden;
b) gegebenenfalls zumindest ein nicht-chirales Vernetzungsmittel, das zumindest zwei polymerisierbare oder vernetzbare funktionelle Gruppen enthält, ausgewählt wird;
c) gegebenenfalls zumindest die homochirale Einheit des ersten Selektors und/oder zumindest etwas des zweiten Selektors mit dem nicht-chiralen Vernetzungsmittel umgesetzt wird/werden;
d) entweder die homochirale Einheit des ersten Selektors mit den homochiralen Einheiten des zweiten Selektors copolymerisiert wird;
e) oder andernfalls zumindest einige der homochiralen Einheiten des zweiten Selektors, die zumindest zwei polymerisierbare oder vernetzbare funktionelle Gruppen enthalten, homopolymerisiert werden, und die erhaltenen Homopolymerisate mit der homochiralen Einheit des ersten Selektors copolymerisiert und mit den verbleibenden homochiralen Einheiten des zweiten Selektors, die zumindest zwei polymerisierbare oder vernetzbare funktionelle Gruppen enthalten, vernetzt werden.

10. Verfahren zur Herstellung eines Polymernetzwerks, wie es in irgendeinem der Ansprüche 2, 7 oder 8 beansprucht wird, **dadurch gekennzeichnet, daß**
a) zumindest ein erster Selektor, der aus zumindest einer homochiralen Einheit besteht, die eine polymerisierbare Gruppe enthält, zumindest ein zweiter Selektor, der aus zumindest einer homochiralen Einheit besteht, die zumindest zwei polymerisierbare oder vernetzbare funktionelle Gruppen enthält, und zumindest ein dritter Selektor, der aus zumindest einer homochiralen Einheit besteht, die zumindest eine polymerisierbare oder vernetzbare funktionelle Gruppe enthält, ausgewählt werden;
b) gegebenenfalls zumindest ein nicht-chirales Vernetzungsmittel, das zumindest zwei polymerisierbare oder vernetzbare funktionelle Gruppen enthält, ausgewählt wird;
c) gegebenenfalls zumindest einige der homochiralen Einheiten des ersten Selektors und/oder des zweiten Selektors und/oder des dritten Selektors mit dem nicht-chiralen Vernetzungsmittel umgesetzt werden;
d) entweder die homochiralen Einheiten des ersten Selektors mit den homochiralen Einheiten des zweiten Selektors und mit den homochiralen Einheiten des dritten Selektors copolymerisiert werden;
e) oder andernfalls zumindest einige der homochiralen Einheiten des ersten Selektors, die eine polymerisierbare oder vernetzbare funktionelle Gruppe enthalten, homopolymerisiert werden, und die erhaltenen Homopolymerisate mit den homochiralen Einheiten des zweiten Selektors und des dritten Selektors, die zumindest zwei polymerisierbare oder vernetzbare funktionelle Gruppen enthalten, vernetzt werden, gegebenenfalls in der Gegenwart der verbleibenden homochiralen Einheiten des ersten Selektors.

11. Optisch aktives Trägermaterial, das ein Polymernetzwerk, wie es in irgendeinem der Ansprüche 1 bis 8 beansprucht wird oder das gemäß dem Verfahren von Anspruch 9 oder 10 hergestellt ist, und einen inerten, anorganischen oder organischen Träger umfaßt, wobei der Träger vorzugsweise in der Form von festen Teilchen ist.

12. Trägermaterial gemäß Anspruch 11, **dadurch gekennzeichnet, daß** es aus zumindest 0,1 Gew.% des Polymernetzwerks besteht.

13. Trägermaterial gemäß Anspruch 11 oder Anspruch 12, **dadurch gekennzeichnet, daß** das Polymernetzwerk chemisch mit dem Träger verknüpft ist oder auf dem Träger abgeschieden ist.

14. Verwendung eines Polymernetzwerks, wie es in irgendeinem der Ansprüche 1 bis 8 beansprucht wird oder das wie in Anspruch 9 oder 10 beansprucht hergestellt ist, oder eines optisch aktiven Trägermaterials, wie es in irgendeinem der Ansprüche 11 bis 13 beansprucht wird, um aus einer Mischung von zumindest zwei Bestandteilen, ausgewählt aus der Gruppe, die organische, anorganische oder organisch-anorganische Moleküle umfaßt, zumindest einen Teil von einem dieser Bestandteile zu entfernen, oder um die Bestandteile durch ein chromatographisches Verfahren zu trennen.

15. Verwendung eines Polymernetzwerks, wie es in irgendeinem der Ansprüche 1 bis 8 beansprucht wird oder das wie in Anspruch 9 oder 10 beansprucht hergestellt ist, oder eines optisch aktiven Trägermaterials, wie es in irgendeinem der Ansprüche 11 bis 13 beansprucht wird, um aus einer Mischung von zumindest zwei Enantiomeren, ausgewählt aus der Gruppe, die chirale organische Moleküle oder chirale organisch-anorganische Moleküle umfaßt, zumindest einen Teil von einem dieser Bestandteile zu entfernen, um so die Mischung mit einem der optisch aktiven homochiralen Moleküle anzureichern und somit eines der angereicherten Enantiomere zu erhalten.

16. Verwendung eines Polymernetzwerks, wie es in irgendeinem der Ansprüche 1 bis 8 beansprucht wird oder das wie in Anspruch 9 oder 10 beansprucht hergestellt ist, oder eines optisch aktiven Trägermaterials, wie es in irgendeinem der Ansprüche 11 bis 13 beansprucht wird, zum Trennen optisch aktiver Moleküle durch ein chromatographisches Verfahren.

17. Verwendung eines Polymernetzwerks, wie es in irgendeinem der Ansprüche 1 bis 8 beansprucht wird oder das wie in Anspruch 9 oder 10 beansprucht hergestellt ist, als Katalysator für die asymmetrische Synthese, gegebenenfalls in der Gegenwart eines Übergangsmetalls.

## Revendications

1. Réseau de pontage tridimensionnel optiquement actif réticulé constitué par un motif homochiral d'au moins un premier sélecteur et au moins un motif homochiral d'au moins un deuxième sélecteur d'une structure différente de celle du premier sélecteur, le motif homochiral du premier sélecteur contenant un groupe fonctionnel polymérisable et le(s) motif(s) homochiral(aux) du deuxième sélecteur contenant au moins deux groupes fonctionnels polymérisables ou réticulables,
les motifs homochiraux étant chimiquement liés les uns aux autres,
à l'exclusion des réseaux de pontage tridimensionnels réticulés obtenus en polymérisant du méthacrylate de (S)-glycidyle et en réticulant simultanément avec du diméthacrylate de (S,S)-2,3-butanediol ou en polymérisant du méthacrylate de 3-([2-(S)-hydroxy]-N-benzylamino)propyle et en réticulant simultanément avec du méthacrylate de (S,S)-2,3-butanediol.

2. Réseau de pontage tridimensionnel optiquement actif réticulé constitué par au moins un motif homochiral d'au moins un premier sélecteur et au moins un motif homochiral d'au moins un deuxième sélecteur d'une structure différente de celle du premier sélecteur et au moins un motif homochiral d'au moins un troisième sélecteur d'une structure différente de celle des premier et deuxième sélecteurs, le(s) motif(s) homochiral(aux) du premier sélecteur contenant un groupe fonctionnel polymérisable, le(s) motif(s) homochiral(aux) du troisième sélecteur contenant au moins un groupe fonctionnel polymérisable et le(s) motif(s) homochiral(aux) du deuxième sélecteur contenant au moins deux groupes fonctionnels polymérisables ou réticulables, les motifs homochiraux étant chimiquement liés les uns aux autres.

3. Réseau de pontage selon la revendication 1 ou la revendication 2, **caractérisé en ce que** les motifs homochiraux du premier sélecteur et, facultativement, du troisième sélecteur sont choisis dans le groupe comprenant en particulier la mono-6-O-(4-allyloxyphénylcarbamate)-hexakis-6-O-(3,5-diméthylphénylcarbamate)-di-heptakis-2,3-O-(3,5-diméthylphénylcarbamate)-β-cyclodextrine, le 2-propynyl-tétra-O-acétyl-β-glucopyranoside, l'allyl-α-D-galactopyranoside, le 1-O-allyl-2-désoxy-4,6-O-isopropylidène-2-(trifluoroacétamido)-α-D-galactopyranoside, la 7-allyl-7,8-dihydro-8-oxoguanosine, la (R)-(+)-α-acryloxy-β,β-diméthylbutyrolactone, l'acrylamido-(L)-alanine éthyl ester, le (2S,5R)-(+)-5-vinyl-2-quinuclidineméthanol, le (2R,5R)-( )-5-vinyl-2-quinuclidineméthanol, la quinine et la quinidine.

4. Réseau de pontage selon l'une des revendications 1 à 3, **caractérisé en ce que** les motifs homochiraux du deuxième sélecteur et, facultativement, du troisième sélecteur sont choisis dans le groupe comprenant en particulier le (R,R)-dithiothréitol (DTT), l'acide tartrique ou les dérivés de celui-ci, tels que le N,N'-diallyltartramide (DAT), le di-tert-butylbenzoyldiallyltartramide (DBBDAT), le diacétyldiallyltartramide (DADAT), les bi-dérivés de cyclodextrine, en particulier la β-cyclodextrine, telle que la bis-6A,6D-O-(4-allyloxyphénylcarbamate)pentakis-6-O-(3,5-diméthylphénylcarbamate)-di-heptakis-2,3-(3,5-diméthylphénylcarbamate)-β-cyclodextrine.

5. Réseau de pontage selon l'une quelconque des revendications 1 à 4, dans lequel les motifs homochiraux d'au moins l'un des sélecteurs sont des dérivés de β-cyclodextrine.

6. Réseau de pontage selon l'une quelconque des revendications 1, 3 à 5, **caractérisé en ce qu'**est attaché à au moins certains des motifs homochiraux d'un sélecteur choisi dans le groupe comprenant le premier sélecteur et le deuxième sélecteur un agent de réticulation non chiral contenant au moins deux groupes fonctionnels polymérisables ou réticulables.

7. Réseau de pontage selon l'une quelconque des revendications 2 à 5, **caractérisé en ce qu'**est attaché à au moins certains des motifs homochiraux d'un sélecteur choisi dans le groupe comprenant le premier sélecteur, le deuxième sélecteur et le troisième sélecteur un agent de réticulation non chiral contenant au moins deux groupes fonctionnels polymérisables ou réticulables.

8. Réseau de pontage selon la revendication 6 ou 7, **caractérisé en ce que** l'agent de réticulation non chiral contenant au moins deux groupes fonctionnels polymérisables ou réticulables est choisi dans le groupe comprenant en particulier l'éthanedithiol, l'acide trithiocyanurique, le 1,6-hexanedithiol, le trithioglycolate de 1,2,6-hexanetriol et le 2,5-dimercapto-1,3,4-thiadiazole.

9. Procédé de préparation d'un réseau de pontage selon l'une quelconque des revendications 1, 6, ou 8, **caractérisé en ce que** :
a) au moins un premier sélecteur constitué par un motif homochiral contenant un groupe fonctionnel polymérisable, au moins un deuxième sélecteur constitué par au moins un motif homochiral contenant au moins deux groupes fonctionnels polymérisables ou réticulables sont choisis ;
b) facultativement, au moins un agent de réticulation non chiral contenant au moins deux groupes fonctionnels polymérisables ou réticulables est choisi ;
c) facultativement, au moins le motif homochiral du premier sélecteur et/ou au moins certains du deuxième sélecteur sont mis à réagir avec l'agent de réticulation non chiral ;
d) soit le motif homochiral du premier sélecteur est copolymérisé avec les motifs homochiraux du deuxième sélecteur ;
e) soit sinon au moins certains des motifs homochiraux contenant au moins deux groupes fonctionnels polymérisables ou réticulables du deuxième sélecteur sont homopolymérisés, et les homopolymérisats obtenus sont copolymérisés avec le motif homochiral du premier sélecteur et réticulés avec les motifs homochiraux restants contenant au moins deux groupes fonctionnels polymérisables ou réticulables du deuxième sélecteur.

10. Procédé de préparation d'un réseau de pontage selon l'une quelconque des revendications 2, 7 ou 8, **caractérisé en ce que** :
a) au moins un premier sélecteur constitué par un motif homochiral contenant un groupe fonctionnel polymérisable, au moins un deuxième sélecteur constitué par au moins un motif homochiral contenant au moins deux groupes fonctionnels polymérisables ou réticulables et au moins un troisième sélecteur constitué par au moins un motif homochiral contenant au moins un groupe fonctionnel polymérisable ou réticulable sont choisis ;
b) facultativement, au moins un agent de réticulation non chiral contenant au moins deux groupes fonctionnels polymérisables ou réticulables est choisi ;
c) facultativement, au moins certains des motifs homochiraux du premier sélecteur et/ou du deuxième sélecteur et/ou du troisième sélecteur sont mis à réagir avec l'agent de réticulation non chiral ;
d) soit les motifs homochiraux du premier sélecteur sont copolymérisés avec les motifs homochiraux du deuxième sélecteur et avec les motifs homochiraux du troisième sélecteur ;
e) soit sinon au moins certains des motifs homochiraux contenant un groupe fonctionnel polymérisable ou réticulable du premier sélecteur sont homopolymérisés, et les homopolymérisats obtenus sont réticulés avec les motifs homochiraux contenant au moins deux groupes fonctionnels polymérisables ou réticulables du deuxième sélecteur et du troisième sélecteur, facultativement en présence des motifs homochiraux restants du premier sélecteur.

11. Matériau de support optiquement actif contenant un réseau de pontage selon l'une quelconque des revendications 1 à 8, ou préparé selon le procédé de la revendication 9 ou 10, est un support inerte, minéral ou organique, ledit support étant de préférence sous la forme de particules solides.

12. Matériau de support selon la revendication 11, **caractérisé en ce qu'**il est constitué par au moins 0,1 % en poids du réseau de pontage.

13. Matériau de support selon la revendication 11 ou la revendication 12, **caractérisé en ce que** le réseau de pontage est chimiquement lié au support ou est déposé sur le support.

14. Utilisation d'un réseau de pontage selon l'une quelconque des revendications 1 à 8 ou préparé tel que revendiqué dans la revendication 9 ou 10, ou d'un matériau de support optiquement actif selon l'une quelconque des revendications 11 à 13, pour éliminer d'un mélange au moins deux constituants, choisis dans le groupe comprenant les molécules organiques, minérales ou organominérales, au moins une partie de l'un de ces constituants, ou pour séparer lesdits constituants par un procédé chromatographique.

15. Utilisation d'un réseau de pontage selon l'une quelconque des revendications 1 à 8 ou préparé tel que revendiqué dans la revendication 9 ou 10 ou d'un matériau de support optiquement actif selon l'une quelconque des revendications 11 à 13, pour éliminer d'un mélange d'au moins deux énantiomères, choisis dans le groupe comprenant les molécules organiques chirales ou les molécules organominérales chirales, au moins une partie de l'un de ces constituants, de façon à enrichir le mélange en l'une des molécules homochirales optiquement actives et à obtenir ainsi l'un des énantiomères enrichis.

16. Utilisation d'un réseau de pontage selon l'une quelconque des revendications 1 à 8 ou préparé tel que revendiqué dans la revendication 9 ou 10, ou d'un matériau de support optiquement actif selon l'une quelconque des revendications 11 à 13, pour séparer des molécules optiquement actives par un procédé chromatographique.

17. Utilisation d'un réseau de pontage selon l'une quelconque des revendications 1 à 8 ou préparé tel que revendiqué dans la revendication 9 ou 10, facultativement en présence d'un métal de transition, en tant que catalyseur pour une synthèse asymétrique.
